Europäisches Patentamt

**European Patent Office**

Office européen des brevets

(11) Publication number: **0 217 444 B1**

## EUROPEAN PATENT SPECIFICATION

(45) Date of publication of patent specification: **03.04.91**   (51) Int. Cl.5: **A01C 15/00**

(21) Application number: **86201569.0**

(22) Date of filing: **11.09.86**

(54) Spreading apparatus.

(30) Priority: **16.09.85 NL 8502526**

(43) Date of publication of application:
**08.04.87 Bulletin 87/15**

(45) Publication of the grant of the patent:
**03.04.91 Bulletin 91/14**

(84) Designated Contracting States:
**AT BE CH DE FR GB IT LI LU NL SE**

(56) References cited:
**DE-B- 2 548 113**

(73) Proprietor: **Multinorm B.V.**
**Hoofdweg 1278 P.O. Box 1**
**NL-2150 AA Nieuw-Vennep(NL)**

(72) Inventor: **Winkel, Jan**
**22, Nagtegaallaan**
**NL-2172 JR Sassenheim(NL)**

(74) Representative: **Hoorweg, Petrus Nicolaas et al**
**OCTROOIBUREAU ARNOLD & SIEDSMA**
**Sweelinckplein 1**
**NL-2517 GK The Hague(NL)**

Rank Xerox (UK) Business Services

**Description**

The invention relates to an apparatus for the distribution of spreadable material, in particular for artificial fertilizer material, comprising substantially a supply holder with at least one passage opening, a tube-like spreading member communicating with the passage opening, said member being driven back and forth around an axis, said drive being formed by a flywheel and a coupling member mounted between the flywheel and the spreading member.

In a spreading apparatus of the above-described type and disclosed in FRA-2336027, it is usual that the spreading member is moved back and forth in a flat horizontal plane, which results in a specific spreading pattern.

The invention has for its aim to move the spreading member such that the spreading pattern is improved.

According to a first embodiment of the invention the apparatus is distinguished in that said oscillating axis is inclined at a certain angle to the vertical, whereas the axis of rotation of the flywheel is inclined at the same angle with respect to the horizontal such that the said oscillating axis is parallel to the plane of the flywheel and such that with respect to the normal direction of motion of the apparatus the axis of rotation of the flywheel extends from the rear face of the flywheel at an angle below the horizontal, and said tube-like spreading member extends in a horizontal way when in the centre position of its back and forth movement.

According to a second embodiment of the invention the apparatus is distinguished in that the spreading member is tiltably journalled around a horizontal axis perpendicular to its centre line, and is provided with a guiding track co-operating with a guiding member connected to the frame such that the distributing end of the spreading member moves upwards as it reaches the extremities of its oscillatory path and returns back down as it moves towards the centre of said path, the distributing end remaining at or above the horizontal level of the opposite end of the spreading member throughout the said path.

According to a third embodiment of the invention the apparatus is distinguished in that the spreading member is tiltably journalled around a horizontal axis perpendicular to its centre line there being provided with a coupling rod which at one end is universally pivotably connected to the frame and at the other end is pivotably connected to the spreading member on the opposite side of said horizontal axis to the distributing end of the spreader member such that the distributing end of the spreading member moves upwards as it reaches the extremities of its oscillatory path and returns back down as its moves towards the centre of said path, the distributing end remaining at or above the horizontal level of the opposite end of the spreading member throughout the said path.

In all those embodiments the tubular spreading members will follow a curved pass leading upwards on both sides of the central plane of the apparatus. In this manner the spreading pattern obtained by a back and forth motion of the spreading pipe acquires an improved form in comparison to an apparatus where the spreading pipe moves in a horizontal plane only.

The invention will be elucidated, herebelow, in the detailed description of three embodiments.

Figure 1 shows a schematic side view of a first embodiment of an apparatus according to the invention,

Figure 2 shows a top view of the apparatus of figure 1,

Figure 3 shows a perspective view of a second embodiment of the apparatus, and

Figure 4 shows a perspective view of a third embodiment of the apparatus.

The apparatus comprises substantially a supply holder 1 for the material to be distributed, which is provided with an outflow opening 2 at its bottom, to which a dosing mechanism 3 is connected. This dozing mechanism can be of any arbitrary form.

At the bottom of dosing mechanism 3 is arranged a funnel-shaped holder 4, to the side-wall of which a spreading pipe 17 is fastened. The holder 4 has an opening in the side-wall so that the material to be distributed can reach the spreading pipe 17 via this opening.

The holder 4 is provided on its underside with a swivel pin 5 which is accommodated in two bearings 6, mounted one above the other, which are accommodated in bush 7 of the frame 8. The frame 8 is suspended on the three-point hitch of an agricultural tractor, for example.

The frame also supports a flywheel 10, journalled at 11 in a bush in the frame, and provided with driving shaft 12, connected to a socket of a universal coupling 13. This universal coupling 13 is driven by the power take-off shaft of the tractor, or the like.

A bearing for accommodating journal 14 of a forked member 15 is eccentrically mounted in flywheel 10, the fork-ends of said forked member being pivotably connected to holder 4 by means of journals 16, mounted on said holder 4.

According to a feature of the invention, shaft journal 5 is positioned as a specific angle α to the vertical, the rotational axis of shaft 12 of the flywheel being oriented perpendicular to journal 12 and thereby making a corresponding angle α to the horizontal.

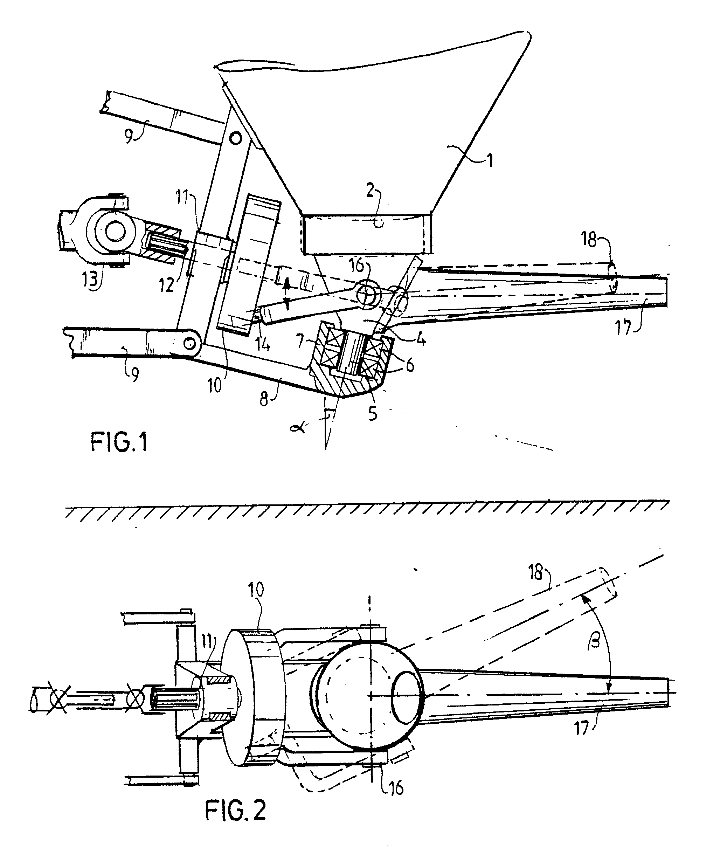

In the situation as drawn in figure 1, spreading pipe 17 has a centre line, which is exactly horizontal when the spreading pipe is in the central position, and further describes a conical surface.

The above-said apparatus works as follows.

Through the driving of the flywheel 10 in a particular rotational direction, holder 4 acquires a reciprocating motion as a consequence of member 15. Since holder 4 moves back and forth around the tilted pivot axis, spreading pipe 17 acquires, in addition to a sideways reciprocating motion as shown in figure 2, an up-and-down motion as shown in figure 1, whereby at the extreme positions of the sideways motion, indicated by β in figure 2, outflow opening 18 of the spreading pipe is higher than in the central position indicated by the full line in figure 2. In this manner, the spreading pattern obtained by a back and forth motion of the spreading pipe acquires an improved form in comparison to an apparatus where the spreading pipe moves in a horizontal plane only.

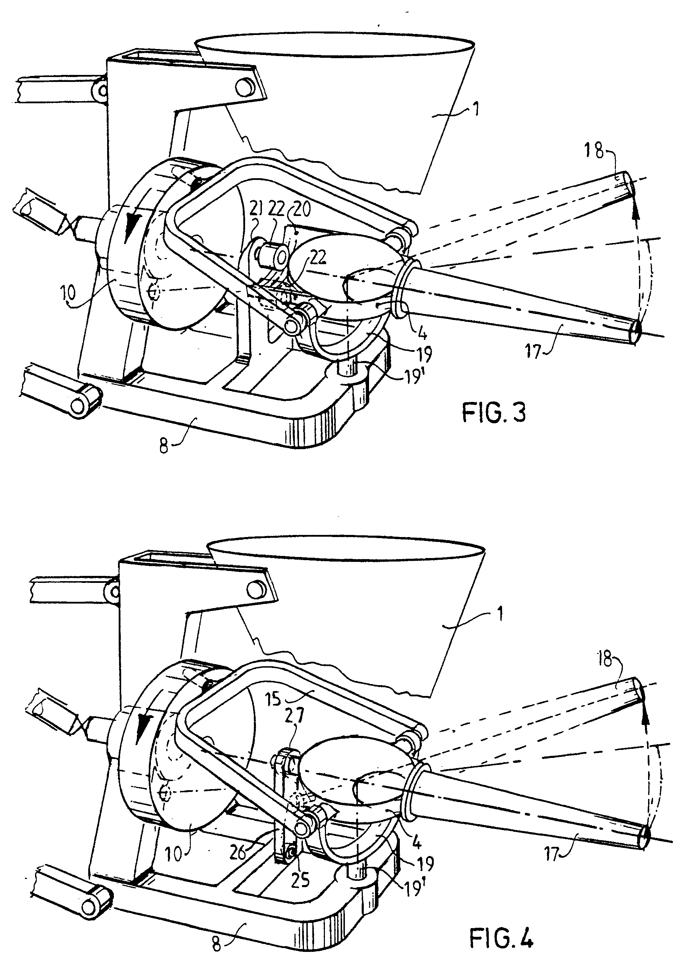

Figure 3 shows an alternative embodiment in which the same reference numerals have been used for corresponding components. The difference from the embodiment above is that holder 4 is tiltably mounted in a forked support 19, provided with a journal 19'. The holder 4 has, on its side diametrically opposite to spreading pipe 17, a cup-shaped extension 20 serving also as a counterweight to spreading pipe 17. This cup-shaped part cooperates with a pair of rollers 22, which are rotatably supported on bracket 21 which is firmly fixed to frame 8.

As a consequence of the rotation of flywheel 10, fork-shaped member 15 transmits, in the known manner, a back and forth motion to holder 4 and therefore also to spreading pipe 17. Since cup-shaped extension 20 also moves back and forth in relation to roller 22, the extension is forced to move up and down in a vertical direction, which is possible on account of its suspension in forked support 19. Consequently, during back and forth motion, spreading pipe 17 undergoes at the same time an up-and-down motion, such that spreading pipe end 18 rises above the horizontal plane through the lowest position of the spreading pipe, indicated by full lines in figure 3.

Figure 4 shows an embodiment, corresponding with figure 3, in with the same numerals have been used for corresponding components. The difference is that fixed support 21 is replaced by coupling rod 26, which is connected in a universally pivotable manner to the frame, at 25, and is joined pivotably at the other end, 27, to holder 4 of the spreading pipe 17. Through the back and forth motion of the spreading pipe, point 27 follows a circular path around point 25, so that the desired effect of upward movement of the spreading pipe towards the outermost positions is achieved, as described for the previous embodiment.

## Claims

1. An apparatus for the distribution of spreadable material, in particular for artificial fertilizer material, comprising substantially a supply holder (1) with at least one passage opening (2), a tube-like spreading member (17) communicating with the passage opening, said member (17) being driven back and forth around an axis, said drive being formed by a flywheel (10) and a coupling member (14) mounted between the flywheel (10) and the spreading member (17), characterized in that, said oscillating axis is inclined at a certain angle to the vertical, whereas the axis of rotation of the flywheel is inclined at the same angle with respect to the horizontal such that the said oscillating axis is parallel to the plane of the flywheel and such that with respect to the normal direction of motion of the apparatus the axis of rotation of the flywheel extends from the rear face of the flywheel at an angle below the horizontal, and said tube-like spreading member (17) extends in a horizontal way when in the centre position of its back and forth movement.

2. An apparatus for the distribution of spreadable material, in particular for artificial fertilizer material, comprising substantially a supply holder (1) with at least one passage opening (2), a tube-like spreading member (17) communicating with the passage opening, said member (17) being driven back and forth around an axis, said drive being formed by a flywheel (10) and a coupling member (14) mounted between the flywheel (10) and the spreading member (17), characterized in that, the spreading member is tiltably journalled around a horizontal axis perpendicular to its centre line, and is provided with a guiding track (20) co-operating with a guiding member (22) connected to the frame (8) such that the distributing end of the spreading member (17) moves upwards as it reaches the extremities of its oscillatory path and returns back down as it moves towards the centre of said path, the distributing end remaining at or above the horizontal level of the opposite end of the spreading member throughout the said path.

3. An apparatus for the distribution of spreadable material, in particular for artificial fertilizer material, comprising substantially a supply holder (1) with at least one passage opening (2), a tube-like spreading member (17) communicating with the passage opening, said member (17) being driven back and forth around an axis, said drive being formed by a flywheel (10) and a coupling member (14) mounted between the flywheel (10) and the spreading member (17), characterized in that, the spreading member is tiltably journalled around a horizontal axis perpendicular to its centre line there being provided a coupling rod (26) which at one end is universally pivotably connected to the frame and at the other end is pivotably connected to the spreading member on the opposite side of said horizontal axis to the distributing end of the spreader member such that the distributing end of the spreading member moves upwards as it reaches the extremities of its oscillatory path and returns back down as its moves towards the centre of said path, the distributing end remaining at or above the horizontal level of the opposite end of the spreading member throughout the said path.

## Revendications

1. Appareil de distribution d'un matériau à épandre, en particulier un engrais artificiel, comprenant pratiquement un récipient d'alimentation (1) ayant au moins une ouverture (2) d'un passage, un organe d'épandage (17) analogue à un tube et communiquant avec l'ouverture du passage, cet organe (17) étant entraîné alternativement autour d'un axe, l'entraînement étant assuré par un volant (10) et un organe d'accouplement (14) monté entre le volant (10) et l'organe d'épandage (17), caractérisé en ce que l'axe d'oscillation est incliné suivant un certain angle par rapport à la verticale, alors que l'axe de rotation du volant est incliné du même angle par rapport à une horizontale si bien que l'axe d'oscillation est parallèle au plan du volant et que, par rapport à la direction normale de déplacement de l'appareil, l'axe de rotation du volant part de la face arrière du volant en faisant un angle tel qu'il est incliné au-dessous de l'horizontale, et l'organe d'épandage (17) analogue à un tube est disposé horizontalement lorsqu'il se trouve dans la position centrale de son mouvement alternatif.

2. Appareil de distribution d'un matériau à épandre, en particulier un engrais artificiel, comprenant pratiquement un récipient d'alimentation (1) ayant au moins une ouverture (2) d'un passage, un organe d'épandage (17) analogue à un tube et communiquant avec l'ouverture du passage, cet organe (17) étant entraîné alternativement autour d'un axe, l'entraînement étant assuré par un volant (10) et un organe d'accouplement (14) monté entre le volant (10) et l'organe d'épandage (17), caractérisé en ce que l'organe d'épandage peut tourillonner autour d'un axe horizontal qui est perpendiculaire à son axe central, et comporte une voie de guidage (20) qui coopère avec un organe de guidage (22) qui est raccordé au châssis (8) afin que l'extrémité de distribution de l'organe d'épandage (17) se déplace vers le haut lorsqu'elle atteint les extrémités du trajet d'oscillation et revienne vers le bas en se déplaçant vers le centre du trajet, l'extrémité de distribution restant au niveau horizontal ou au-dessus niveau horizontal de l'extrémité opposée de l'organe d'épandage dans tout le trajet.

3. Appareil de distribution d'un matériau à épandre, en particulier un engrais artificiel, comprenant pratiquement un récipient d'alimentation (1) ayant au moins une ouverture (2) d'un passage, un organe d'épandage (17) analogue à un tube et communiquant avec l'ouverture du passage, cet organe (17) étant entraîné alternativement autour d'un axe, l'entraînement étant assuré par un volant (10) et un organe d'accouplement (14) monté entre le volant (10) et l'organe d'épandage (17), caractérisé en ce que l'organe d'épandage tourillonne autour d'un axe horizontal perpendiculaire à son axe central de manière qu'il puisse pivoter, une barre d'accouplement (26) étant disposée de manière que sa première extrémité soit raccordée au châssis en pouvant présenter un mouvement universel et que son autre extrémité soit raccordée à l'organe d'épandage afin qu'elle puisse pivoter, du côté opposé de l'axe horizontal par rapport à l'extrémité de distribution de l'organe d'épandage, si bien que l'extrémité de distribution de l'organe d'épandage se déplace vers le haut en atteignant les extrémités de son trajet oscillant et revient vers le bas dans son déplacement vers le centre du trajet, l'extrémité de distribution restant au niveau horizontal de l'extrémité opposée de l'organe d'épandage ou au-dessus dans tout le trajet.

## Ansprüche

1. Vorrichtung zur Verteilung von auszustreuendem Material, insbesondere für künstliches Düngematerial, mit im wesentlichen einem zufuhrmaterialhalter (1) mit wenigstens einer Durchgangsöffnung (2), einem mit der Durchgangsöffnung verbundenen rohrartigen Streuteil (17), das um eine Achse herum rückwärts und vorwärts angetrieben wird, wobei der Antrieb durch ein Schwungrad (10) ausgebildet ist, sowie ein Kupplungsteil (14), das zwischen dem Schwungrad (10) und dem Streuteil (17) montiert ist,

**dadurch gekennzeichnet, daß**

die oszillierende Achse unter einem bestimmten Winkel zur Senkrechten geneigt ist, wobei die Achse der Drehbewegung des Schwungrades unter dem gleichen Winkel bezüglich der Horizontalen geneigt ist, so daß die oszillierende Achse parallel zu der Ebene des Schwungrades ist, und daß bezüglich der Normalrichtung der Bewegung der Vorrichtung die Drehachse des Schwungrades sich von der Rückseite des Schwungrades in einem Winkel unterhalb der Horizontalen erstreckt, und sich das rohrartige Streuteil (17) horizontal erstreckt, wenn es sich in der zentralen Stellung seiner Rückwärts- und Vorwärtsbewegung befindet.

2. Vorrichtung zur Verteilung auszustreuenden Materiales, insbesondere für künstliches Düngematerial, mit im wesentlichen einem Zufuhrmaterialhalter (1) mit wenigstens einer Durchgangsöffnung (2), einem mit der Durchgangsöffnung verbundenen rohrartigen Steuteil (17), das um eine Achse rückwärts und vorwärts angetrieben wird, wobei der Antrieb durch ein Schwungrad (10) ausgebildet ist, sowie ein Kuppungsteil (14), das zwischen dem Schwungrad (10) und dem Streuteil (17) montiert ist,

**dadurch gekennzeichnet, daß**

das Streuteil kippbar um eine horizontale Achse senkrecht zu seiner Mittelpunktslinie gelagert ist und mit einer Führungsbahn (20) versehen ist, die mit einem mit dem Rahmen verbundenen Führungsteil (22) zusammenwirkt, derart, daß das Verteilerende des Streuteiles (17) sich nach oben bewegt, wenn es an den Enden seiner oszillatorischen Bahn angelangt ist, und nach unten zurückkehrt, wenn es sich in Richtung des Zentrums der Bahn bewegt, wobei das Verteilerende über die Bahn auf dem oder oberhalb des horizontalen Niveaus des gegenüberliegenden Endes des Streuteiles verbleibt.

3. Vorrichtung zur Verteilung auszustreuenden Materials, insbesondere für künstliches Düngematerial mit im wesentlichen einem Zufuhrmaterialhalter (1) mit wenigstens einer Durchgangsöffnung (2), einem mit der Durchgangsöffnung verbundenen rohrartigen Streuteil (17), das um eine Achse herum rückwärts und vorwärts angetrieben wird, wobei der Antrieb durch ein Schwungrad (10) ausgebildet ist, sowie ein Kupplungsteil (14), das zwischen dem Schwungrad (10) und dem Streuteil (17) montiert ist,

**dadurch gekennzeichnet, daß**

das Streuteil kippbar um eine horizontale Achse senkrecht zu seiner Mittelpunktslinie gelagert ist, und dort eine Kupplungsstange (26) vorgesehen ist, die an einem Ende allseitig schwenkbar mit dem Rahmen verbunden ist und mit dem anderen Ende schwenkbar mit dem Streuteil verbunden ist, und zwar an der dem Verteilerende des Streuteiles gegenüberliegenden Seite der horizontalen Achse, derart, daß das Verteilerende des Streuteiles sich nach oben bewegt, wenn es die Enden seiner oszillatorischen Bahn erreicht, und wieder nach unten zurückkehrt, wenn es sich in Richtung des Zentrums der Bahn bewegt, wobei das Verteilerende über der Bahn auf dem oder oberhalb des horizontalen Niveaus des gegenüberliegenden Endes des Streuteiles verteilt.

FIG.1

FIG.2

FIG. 3

FIG. 4